# NOUVEAU FASCICULE DE BREVET EUROPEEN

(11) **EP 0 441 420 B2**
(45) Date de publication et mention de la décision concernant l'opposition: **02.09.1998**
(45) Mention de la délivrance du brevet: 27.09.1995
(21) Numéro de dépôt: 91200069.2
(22) Date de dépôt: 16.01.1991
(51) Int. Cl.: C22C 18/00, H01M 4/42

(54) **Utilisation dans une pile électrochimique d'un godet en alliage de zinc**
Verwendung eines Behälters aus Zinklegierung in einer elektrochemischen Batterie
Use of a zinc alloy can in an electrochemical cell

(30) Priorité: 08.02.1990 BE 9000147
(43) Date de publication de la demande: 14.08.1991
(73) Titulaire: n.v. UNION MINIERE s.a., B-1200 Bruxelles (BE)
(72) Inventeur: Strauven, Yvan A.J., B-3580 Neerpelt (BE); Skenazi, André, B-3030 Heverlee (BE)
(74) Mandataire: Saelemaekers, Juul

(56) Documents cités:
- EP-A- 0 172 255
- EP-A- 0 423 865
- EP-A- 0 427 315
- DE-A- 3 902 650
- FR-A- 890 865
- FR-A- 2 078 812
- FR-A- 2 511 395
- GB-A- 837 523
- GB-A- 2 119 404
- K. Miyasaki et K. Kagawa, Progress in Batteries & Solar Cells, Vol. 6 (1987), p. 110-112
- Toda Kazuo et al., Zinc alloys for sacrificial anodes for corrosion protection, Chemical Abstracts 92(18): 155102h, 1979 et JP-A-54038050
- Takemici Otsu, Research on the Zinc Used for Dried Cells, Chemical Abstracts Vol. 48, 8084a & Fuso Metals 2 (1950, p. 178-182
- Directive de la Commission Européenne du 18.03.1991 (91/157 EEC)
- Umweltschutzpreise für die Industrie 1989/90 am 06.03.1990
- Power Sources, 7. Proceedings of the 11th International Symposium, Brighton, September 1978, Ed. J. Thompson, Academic Press, 1979, p. 463,479
- C.H. Mathewson, Zinc, 1959, American Chemical Society Series, Reinhold Publishing Corporation, p. 388-389
- Dictionnaire des Métaux Non-ferreux, Marabout Université, 1972, p. 156-159
- Ullmann, Vol. 24, 1983, p. 622
- Norme ASTM B6-87 (réapprouvé 1992), Standard Specification for Zinc, p. 6,7
- Takemichi Othsu, Anticorrosive Zinc Alloy, Chemical Abstracts, Vol. 46, 11091f & JP-A-26853

## Description

La présente invention se rapporte à l'utilisation dans une pile électrochimique d'un godet en alliage de zinc contenant de l'indium et du manganèse.

Une telle utilisation est connue de Chemical Abstracts Vol. 106, 1987, 36009f. L'alliage qui y est décrit contient, outre le zinc, de l'indium et du manganèse, également encore du plomb et du cadmium. Cet alliage connu a l'inconvénient de contenir l'élément très toxique qu'est le cadmium.

Le but de la présente invention est de fournir un alliage de zinc contenant de l'indium et du manganèse pour godets de piles, qui ne contient pas de cadmium et qui, pourtant, a une résistance mécanique, une usinabilité et une résistance à la corrosion suffisantes.

La présente invention a pour objet l'utilisation dans une pile électrochimique d'un godet en un alliage de zinc exempt de cadmium, fait en partant de zinc raffiné thermiquement ou électrolytiquement et contenant en pourcentage en poids 0,001 - 1 % d'ln, 0,005 - 1 % de Mn et facultativement jusqu'à 1 % de Pb, 0,005 - 1 % d'AI, 0,0005 - 0,1 % de MTR, MTR étant un métal du groupe des terres rares ou un mélange de métaux du groupe des terres rares, le reste de l'alliage étant constitué par le zinc et les impuretés inévitables. La demanderesse renonce toutefois à la protection pour une telle utilisation lorsque le godet est en un alliage de zinc, fait en partant du zinc susdit et qui
(a) est exempt d'AI et de MTR et contient à la fois moins de 0,05 % de Pb, 0,005 - 1 % de Mn et 0,01 - 0,02 % d'In ; ou
(b) contient à la fois moins de 0,05 % de Pb, 0,005 - 1,5 % d'un mélange d'AI, de MTR et de Mn et et 0,01 - 0,02 % d'ln,
parce que cette utilisation de ces alliages est déjà décrite dans la demande antérieure EP-A-0432865.

Les impuretés inévitables sont les impuretés qui sont présentes dans le zinc ou dans les éléments qui sont ajoutés au zinc pour l'obtention de l'alliage. Aussi, l'expression ci-dessus "en un alliage de zinc exempt de cadmium" doit se comprendre comme suit : l'alliage utilisé selon l'invention est exempt de cadmium à moins que celui-ci ne soit éventuellement présent comme impureté inévitable.

La teneur en indium doit s'élever au moins à 0,001 % et la teneur en manganèse au moins à 0,005 %, sinon la résistance mécanique et/ou la résistance à la corrosion sont insuffisantes.

La teneur en indium ne peut dépasser 1 %, des teneurs supérieures compromettant l'usinabilité et augmentant inutilement le prix de l'alliage. Avantageusement la teneur en indium ne sera pas supérieure à 0,1 % et préférablement pas supérieure à 0,05 %. Toutefois plus de préférence est donnée à une teneur en indium allant jusqu'à 0,02 % et la plus grande préférence va à une teneur en indium allant jusqu'à 0,01 %. De préférence la teneur en indium doit s'élever au moins à 0,003 %.

La teneur en manganèse ne peut dépasser 1 %; sinon une quantité telle de composés intermétalliques Zn-Mn est formée que des fissures peuvent se produire lors du laminage de l'alliage. De préférence la teneur en manganèse s'élève à 0,005-0,1 %, la teneur la plus avantageuse étant de 0,005-0,05 %.

En cas de présence de plomb dans l'alliage utilisé selon l'invention, sa teneur ne peut dépasser 1 %; aux teneurs en plomb supérieures, des problèmes de corrosion se posent.

De préférence la teneur en plomb ne sera pas supérieure à 0,3 %. Il est souhaitable que la teneur en plomb ne soit pas supérieure à 0,05 %, une teneur d'au maximum 0,005 % étant la plus avantageuse.

Des exemples typiques d'alliages utilisés selon l'invention ont la composition suivante :
Zn - 0,1 % In - 0,005 % Mn
Zn - 0,05 % In - 0,005 % Mn
Zn - 0,003 % In - 0,005 % Mn
Zn - 0,003 % In - 0,1 % Mn
Zn - 0,003 % In - 0,05 % Mn
Zn - 0,05 % In - 0,1 % Mn
Zn - 0,05 % In - 0,05 % Mn
Zn - 0,1 % In - 0,05 % Mn
Zn - 0,1 % In - - 0,1 % Mn
Zn - 0,1 % In - 0,005 % Mn - 0,05 % Pb
Zn - 0,01 % In - 0,05 % Mn - 0,2 % Pb
Zn - 0,007 % In - 0,05 % Mn - 0,025 % Pb
Zn - 0,005 % In - 0,05 % Mn - 0,2 % Pb
Zn - 0,005 In - 0,05 % Mn - 0,025 % Pb
Zn - 0,05 % In - 0,005 % Mn - 0,01 % Al
Zn - 0,02 % In - 0,005 % Mn - 0,1 % Al
Zn - 0,003 % In - 0,005 % Mn - 0,3 % Pb - 0,01 % MTR
Zn - 0,003 % In - 0,1 % Mn - 0,005 % Pb - 0,01 % Al
Zn - 0,003 % In - 0,05 % Mn- 0,3 % Pb
Zn - 0,01 % In - 0,05 % Mn - 0,05 % Pb - 0,02 % Al
Zn - 0,05 % In - 0,1 % Mn - 0,02 % Al - 0,002 % MTR
Zn - 0,05 % In - 0,05 % Mn - 0,1 % Al - 0,005 % MTR
Zn - 0,1 % In - 0,05 % Mn - 0,005 % Pb - 0,002 %MTR
Zn - 0,1 % In - 0,1 % Mn - 0,005 % Pb - 0,005 %
Al - 0,0001 % MTR
Lors de la préparation de ces alliages, on part de zinc raffiné thermiquement ou électrolytiquement et pour introduire le MTR on peut utiliser, soit du misch-metall, un alliage d'environ 45 % de Ce, 45 % de La et 10 % d'autres métaux du groupe des terres rares, soit un alliage-mère d'aluminium contenant 4 % de La et 4 % de Ce.

## Revendications

1. Utilisation dans une pile électrochimique d'un godet en un alliage de zinc exempt de cadmium, fait en partant de zinc raffiné thermiquement ou électrolytiquement et contenant en pourcentage en poids 0,001 - 1 % d'In, 0,005 - 1 % de Mn et facultativement jusqu'à 1 % de Pb, 0,005 - 1 % d'Al, 0,0005 - 0,1 % de MTR, MTR étant un métal du groupe des terres rares ou un mélange de métaux du groupe des terres rares, le reste de l'alliage étant constitué par le zinc et les impuretés inévitables,
étant exclue une telle utilisation lorsque le godet est en un alliage de zinc, fait en partant du zinc susdit et qui
(a) est exempt d'Al et de MTR et contient à la fois moins de 0,05 % de Pb, 0,005 - 1 % de Mn et 0,01 - 0,02 % d'In ; ou
(b) contient à la fois moins de 0,05 % de Pb, 0,005 - 1,5 % d'un mélange d'Al, de MTR et de Mn et 0,01 - 0,02 % d'In.

2. Utilisation selon la revendication 1, caractérisée en ce que le godet contient jusqu'à 0,1 % d'In.

3. Utilisation selon la revendication 2, caractérisée en ce que le godet contient jusqu'à 0,05 % d'In.

4. Utilisation selon la revendication 3, caractérisée en ce que le godet contient jusqu'à 0,02 % d'In.

5. Utilisation selon la revendication 4, caractérisée en ce que le godet contient jusqu'à 0,01 % d'In.

6. Utilisation selon une des revendications 1-5, caractérisée en ce que le godet contient au moins 0,003 % d'In.

7. Utilisation selon une des revendications 1-6, caractérisée en ce que le godet contient jusqu'à 0,1 % de Mn.

8. Utilisation selon la revendication 7, caractérisée en ce que le godet contient jusqu'à 0,05 % de Mn.

9. Utilisation selon une des revendications 1-8, caractérisée en ce que le godet contient jusqu'à 0,3 % de Pb.

10. Utilisation selon la revendication 9, caractérisée en ce que le godet contient jusqu'à 0,05 % de Pb.

11. Utilisation selon la revendication 10, caractérisée en ce que le godet contient jusqu'à 0,005 % de Pb.

## Claims

1. Use of a cup consisting of a cadmium-free zinc alloy in an electrochemical cell, the cup having been made from thermally or electrolytically refined zinc containing, in per cent by weight, 0.001 - 1% of In, 0.005 - 1% of Mn and optionally up to 1 of Pb, 0.005 - 1% of Al and 0.0005 - 0.1% of REM, REM being a metal from the rare earths group or a mixture of metals from the rare earths group, the remainder of the alloy consisting of zinc and the inevitable impurities,
such use being excluded if the cup consists of a zinc alloy which has been made from the zinc specified above and which (a) is free of Al and REM and at the same time contains less than 0.05% of Pb, 0.005 - 1% of Mn and 0.01 - 0.02% of In, or (b) contains at the same time less than 0.05% of Pb, 0.005 - 1.5% of a mixture of Al, REM and Mn, and 0.01 - 0.02% of In.

2. Use according to Claim 1, characterized in that the cup contains up to 0.1% of In.

3. Use according to Claim 2, characterized in that the cup contains up to 0.05% of In.

4. Use according to Claim 3, characterized in that the cup contains up to 0.02% of In.

5. Use according to Claim 4, characterized in that the cup contains up to 0.01% of In.

6. Use according to one of Claims 1 - 5, characterized in that the cup contains at least 0.003% of In.

7. Use according to one of Claims 1 - 6, characterized in that the cup contains up to 0.1 of Mn.

8. Use according to Claim 7, characterized in that the cup contains up to 0.05% of Mn.

9. Use according to one of Claims 1 - 8, characterized in that the cup contains up to 0.3% of Pb.

10. Use according to Claim 9, characterized in that the cup contains up to 0.05% of Pb.

11. Use according to Claim 10, characterized in that the cup contains up to 0.005% of Pb.

## Patentansprüche

1. Verwendung eines Bechers aus einer cadmium-freien Zinklegierung in einer elektrochemischen Zelle, wobei der Becher aus thermisch oder elektrolytisch raffiniertem Zink hergestellt ist und in Gewichtsprozent 0,001 - 1% In, 0,005 - 1% Mn und gegebenenfalls nicht mehr als 1% Pb, 0,005 - 1% Al und 0,0005 - 0,1% SEM enthält, wobei SEM ein Metall aus der Gruppe der seltenen Erden oder ein Gemisch von Metallen aus der Gruppe der seltenen Erden ist, und der Rest der Legierung aus Zink und den unvermeidlichen Verunreinigungen besteht, unter Ausschluß einer solchen Verwendung, wenn der Becher aus einer Zinklegierung besteht, die aus dem oben angegebenen Zink hergestellt ist und
(a) frei von Al und SEM ist und gleichzeitig weniger als 0,05% Pb, 0,005 - 1% Mn und 0,01 - 0,02% In oder
(b) gleichzeitig weniger als 0,05% Pb, 0,005 - 1,5% eines Gemisches aus Al, SEM und Mn sowie 0,01 - 0,02% In enthält.

2. Verwendung nach Anspruch 1, dadurch gekennzeichnet, daß der Becher nicht mehr als 0,1% In enthält.

3. Verwendung nach Anspruch 2, dadurch gekennzeichnet, daß der Becher nicht mehr als 0,05% In enthält.

4. Verwendung nach Anspruch 3, dadurch gekennzeichnet, daß der Becher nicht mehr als 0,02% In enthält.

5. Verwendung nach Anspruch 4, dadurch gekennzeichnet, daß der Becher nicht mehr als 0,01% In enthält.

6. Verwendung nach einem der Ansprüche 1-5, dadurch gekennzeichnet, daß der Becher mindestens 0,003% In enthält.

7. Verwendung nach einem der Ansprüche 1-6, dadurch gekennzeichnet, daß der Becher nicht mehr als 0,1% Mn enthält.

8. Verwendung nach Anspruch 7, dadurch gekennzeichnet daß der Becher nicht mehr als 0,05% Mn enthält.

9. Verwendung nach einem der Ansprüche 1-8, dadurch gekennzeichnet, daß der Becher nicht mehr als 0,3% Pb enthält.

10. Verwendung nach Anspruch 9, dadurch gekennzeichnet, daß der Becher nicht mehr als 0,05% Pb enthält.

11. Verwendung nach Anspruch 10, dadurch gekennzeichnet, daß der Becher nicht mehr als 0,005% Pb enthält.
